# DEMANDE DE BREVET EUROPEEN

(11) **EP 0 810 241 A1**
(43) Date de publication de la demande: **03.12.1997**
(21) Numéro de dépôt: 97400996.1
(22) Date de dépôt: 02.05.1997
(51) Int. Cl.: C08F 259/04, C08F 14/06

(54) **Latex bipopulé de copolymères du chlorure de vinyle, son procédé de fabrication et ses applications**

(30) Priorité: 31.05.1996 FR 9606734
(71) Demandeur: ELF ATOCHEM S.A., 92800 Puteaux (FR)
(72) Inventeur: Espiard, Philippe, 60140 Liancourt (FR); Peres, Richard, 04600 Saint Auban Sur Durance (FR); Ernst, Benoît, 27170 Beaumont-Le-Rocher (FR)

(57) **Abrégé**

La présente invention concerne un latex bipopulé de copolymères du chlorure de vinyle, dont les particules sont constituées d'un coeur à base de polymères de chlorure de vinyle, d'une première couche formée de copolymères de chlorure de vinyle avec au moins un monomère, choisi parmi les (meth)acrylates d'alkyle et les esters vinyliques et éventuellement avec un agent de réticulation ou de greffage, et éventuellement d'une deuxième couche à base de polymères de chlorure de vinyle. Elle a également pour objet le procédé de fabrication de ce latex et son utilisation.

## Description

La présente invention concerne un latex bipopulé de copolymères du chlorure de vinyle, dont les particules sont constituées d'un coeur de polymères à base de chlorure de vinyle, d'une couche externe et éventuellement d'une couche intermédiaire, et son procédé de fabrication. Elle concerne également l'utilisation de ce latex et de ses copolymères.

Par polymères à base de chlorure de vinyle, on entend les homo- et copolymères, ces derniers contenant au moins 50 % en poids de chlorure de vinyle et au moins un monomère copolymérisable avec le chlorure de vinyle. Comme monomères copolymérisables, on peut citer les esters vinyliques des acides mono-et poly-carboxyliques, tels que acétate, propionate, benzoate de vinyle ; les acides insaturés mono-et poly-carboxyliques, tels que acrylique, méthacrylique, maléique, fumarique, itaconique, ainsi que leurs esters aliphatiques, cycloaliphatiques, aromatiques, leurs amides, leurs nitriles ; les halogénures d'alkyle, de vinyle, de vinylidène ; les alkylvinyl-éthers ; les oléfines.

Les monomères copolymérisables préférés sont les esters vinyliques, les (meth)acrylates aliphatiques et les halogénures de vinylidène.

Les polymères à base de chlorure de vinyle sont avantageusement les homopolymères de chorure de vinyle.

La demanderesse a maintenant découvert des copolymères de chlorure de vinyle, sous forme de latex, dont les particules sont constituées d'un coeur de polymères à base de chlorure de vinyle, enrobé d'une couche de copolymère de chlorure de vinyle et d'au moins un monomère choisi dans le groupe A formé de (méth)acrylates d'alkyle, le groupe alkyle ayant un nombre de carbone compris entre 1 et 8, et d'esters vinyliques des acides mono-et poly-carboxyliques.

La composition du copolymère dans la couche, enrobant le coeur de la particule, peut être constante ou variable au fur et à mesure qu'on s'éloigne du coeur. Par exemple elle peut être appauvrie ou enrichie en chlorure de vinyle au fur et à mesure qu'on s'éloigne du coeur de la particule. Le ou les monomère(s) du groupe A est ou sont avantageusement choisi(s) parmi l'acrylate de butyle et l'acrylate de méthyle. Le copolymère constituant cette couche peut être réticulé ou greffé.

Comme agent réticulant ou de greffage on peut citer le methacrylate d'allyle, le diallylphtalate ou le divinylbenzène.

En plus du coeur et de la couche décrite ci-dessus, les particules de copolymères peuvent être recouvertes d'une deuxième couche de polymères à base de chlorure de vinyle.

Dans les particules de copolymères selon l'invention, le coeur représente environ 1 à 50 % en poids par rapport à la masse totale de la particule et de préférence environ 2 à 20 %.

Le(s) monomère(s) du groupe A représente(nt) environ 1 à 50 % en poids par rapport à la masse totale de la particule et de préférence environ 1 à 10 %.

Le latex renfermant les copolymères décrits ci-dessus contient deux populations de particules présentant des diamètres moyens différents, l"un compris entre 0,4 et 2,5 µm et l'autre entre 0,08 et 1 µm et dans un rapport pondéral compris entre 0,1 et 10.

Les latex ayant une concentration en polymère supérieure à 40 % en poids, de faible viscosité et de granulométrie parfaitement reproductible présentent industriellement un très grand intérêt et plus particulièrement dans les applications plastisols. Ils peuvent être obtenus par polymérisation en microsuspension suivant la méthode décrite dans le brevet FR 2 309 569, particulièrement adaptée pour les latex bipopulés d'homopolymère du chlorure de vinyle. Une tentative pour préparer un latex bipopulé de copolymère de chlorure de vinyle et d'acétate de vinyle est illustrée dans l'exemple 13, mais ce latex a une viscosité de 1,5 fois plus élevée que celle du latex obtenu par l'homopolymérisation du chlorure de vinyle.

Par ailleurs, le brevet US 4 461 869 divulgue un latex bipopulé de polymères vinyliques obtenu par mélange de 10-40 % en poids d'un latex de fines particules d'homopolymère de chlorure de vinyle dont le diamètre moyen est compris entre 0,1 et 0,5 µm et de 90-60 % en poids d'un latex de copolymère du chlorure de vinyle et d'acrylate d'alkyle, le diamètre moyen des particules étant compris entre 0,5 et 1,5 µm. De plus, il est indiqué dans ce document qu'un latex bipopulé de copolymère du chlorure de vinyle ne peut être obtenu par polymérisation.

Malgré ces préjugés, la demanderesse a réussi à obtenir un latex bipopulé de copolymères du chlorure de vinyle par polymérisation en microsuspension ensemencée.

Par polymérisation en microsuspension, ou suspension fine, on entend une polymérisation, en présence d'initiateurs organo-solubles, d'au moins un monomère dispersé par des moyens mécaniques énergiques dans un milieu aqueux contenant un émulsifiant en tant que stabilisant, afin d'obtenir une dispersion de particules dont le diamètre moyen est inférieur à 5 microns.

Un autre objet de l'invention est le procédé de préparation de latex de copolymères du chlorure de vinyle par polymérisation en microsuspension caractérisé en ce que l'on polymérise, avec ou sans ajout d'un initiateur hydrosoluble, le chlorure de vinyle avec au moins un monomère choisi dans le groupe A, formé de méthacrylates et acrylates d'alkyle, le groupe alkyle ayant un nombre de carbone compris entre 1 et 8, et d'esters vinyliques des acides mono- et poly-carboxyliques, et avec éventuellement un agent réticulant ou de greffage, le ou les monomère(s) du groupe A étant introduit(s) en continu, en présence d'un polymère d'ensemencement (P1) à base de chlorure de vinyle préalablement préparé par polymérisation en microsuspension et dont les particules dispersées dans un milieu aqueux renferment au moins un initiateur organosoluble et en présence d'un deuxième polymère d'ensemencement (P2) à base de chlorure de vinyle dont la taille des particules est différente de celle du premier polymère d'ensemencement (P1).

Le polymère d'ensemencement (P1) nécessaire à la polymérisation est préparé selon les techniques classiques de polymérisation en microsuspension. Il est utilisé sous forme d'une dispersion de ses particules dont le diamètre moyen est compris entre 0,05 et 1,5 µm et de préférence entre 0,2 et 1 µm.

Un moyen de préparer le polymère d'ensemencement P1 consiste à mettre en oeuvre de l'eau, du chlorure de vinyle seul ou associé avec un ou plusieurs monomère(s) copolymérisable(s), un initiateur organosoluble et un émulsifiant anionique éventuellement associé à un émulsifiant non ionique. Le ou les monomères sont finement dispersés dans l'eau à l'aide d'un moyen mécanique énergique tel que, par exemple, moulin colloïdal, pompe rapide, agitateur à vibrations, appareil à ultra-sons. La microsuspension obtenue est alors chauffée sous pression autogène et sous agitation modérée à une température généralement comprise entre 30 et 65 ° C. Après la chute de la pression, la réaction est arrêtée et le ou les monomères non transformés sont dégazés.

Les initiateurs organosolubles, à mettre en oeuvre dans la préparation du polymère d'ensemencement (P1), sont représentés par les peroxydes organiques, tels que les peroxydes de lauroyle, de décanoyle, de caproyle, le diéthylperacétate de tertiobutyle, le percarbonate de diéthylhexyle, le peroxyde de diacétyle.

Le choix de l'initiateur organosoluble dépend de sa vitesse de décomposition à la température de réaction adoptée. En effet, ledit initiateur doit être suffisamment réactif, afin que des doses normales, de l'ordre de 0,1 à 3 % en poids par rapport au monomère ou au mélange de monomères, permettent de réaliser la préparation du polymère d'ensemencement dans des temps compris entre 4 et 20 heures. Cependant, la vitesse de décomposition de l'initiateur ne doit pas être trop élevée, de façon que la quantité d'initiateur décomposé dans la préparation du polymère d'ensemencement ne dépasse pas la moitié de la quantité d'initiateur mis en oeuvre. Pour cela, il est donc nécessaire de choisir un initiateur dont la demi-durée de vie est telle que la proportion d'initiateur détruit, lors de la préparation du polymère d'ensemencement, est comprise entre 5 et 50 % en poids de la totalité de l'initiateur mis en oeuvre.

Le peroxyde de lauroyle est avantageusement choisi.

Dans le cas où l'on emploie plusieurs initiateurs organosolubles, on a avantage à les choisir de réactivité différente ; les initiateurs les plus réactifs agissent principalement au cours de la préparation du polymère d'ensemencement, alors que les initiateurs les moins réactifs agissent surtout au cours de la polymérisation ensemencée du chlorure de vinyle avec au moins un monomère choisi dans le groupe A et avec éventuellement un agent de réticulation ou de greffage.

Le deuxième polymère d'ensemencement (P2) se présente sous forme d'une dispersion de particules de polymère, dont le diamètre moyen est compris entre 0,05 et 1,5 µm, de préférence entre 0,05 et 0,8 µm et qui peuvent renfermer un initiateur.

Cette dispersion de particules peut être obtenu par les techniques classiques de polymérisation en microsuspension ou en émulsion.

La préparation du deuxième polymère d'ensemencement (P2), lorsqu'elle est effectuée par polymérisation en microsuspension, est réalisée ainsi qu'il est décrit précédemment, mais l'homogénéisation est plus poussée si les particules à obtenir sont de très petite taille. Dans le procédé de l'invention, il est généralement plus avantageux de mettre en oeuvre un deuxième polymère d'ensemencement (P2) ne renfermant pas d'initiateur. Sa polymérisation est alors effectuée avec une quantité d'initiateur telle que au moins 80 % en poids dudit initiateur soient détruits au cours de la réaction.

La préparation du deuxième polymère d'ensemencement (P2) est de préférence effectuée par polymérisation en émulsion, qui consiste à mettre en oeuvre de l'eau, du chlorure de vinyle seul ou associé à un ou plusieurs monomère(s) copolymérisable(s), un initiateur hydrosoluble et un émulsifiant anionique éventuellement associé à un émulsifiant non ionique.

La taille des particules est réglée selon les méthodes habituelles propres à la polymérisation en émulsion, telles que choix judicieux de la nature et de la quantité d'émulsifiant utilisé, mise en oeuvre de semences, modification de la vitesse d'agitation.

Le mélange réactionnel est chauffé sous pression autogène et agitation modérée à une température comprise entre 30 et 65° C. Après chute de pression, la réaction est arrêtée et le ou les monomères non transformés sont dégazés.

Les initiateurs hydrosolubles nécessaires à la préparation du deuxième polymère d'ensemencement (P2) sont généralement représentés par l'eau oxygénée, les persulfates de métaux alcalins ou d'ammonium associés ou non à des réducteurs hydrosolubles, tels que sulfites ou bisulfites de métaux alcalins. Les quantités utilisées, très variables, dépendent du système initiateur choisi et sont juste suffisantes pour assurer la polymérisation dans des temps compris entre 4 et 10 heures.

Dans la polymérisation selon l'invention, la quantité totale des deux polymères d'ensemencement à mettre en oeuvre représente environ 1 à 50 % en poids par rapport à la somme chlorure de vinyle, monomère(s) à polymériser et polymères d'ensemencement, de préférence 2 à 20 %.

La proportion massique du polymère d'ensemencement P1 par rapport à P2 est comprise entre 95/5 et 5/95.

L'introduction du ou des monomère(s) du groupe A peut être effectuée à débit constant ou à débit variable et de préférence croissant ou décroissant au cours de la réaction.

On peut également arrêter l'introduction de ce(s) comonomère(s) avant la fin de la réaction et de préférence une ou deux heure(s) avant la fin.

La façon d'introduire le(s) monomère(s) du groupe A est choisie en fonction de l'utilisation souhaitée du latex ou de ses copolymères.

L'acrylate de butyle, l'acrylate de méthyle sont avantageusement choisis parmi les monomères du groupe A. Ils sont introduits en continu à débit constant et de préférence environ deux heures avant la fin de la polymérisation.

Le ou les monomères du groupe A représente(nt) environ 1 à 50 % en poids par rapport à la somme polymères d'ensemencement, chlorure de vinyle et monomère(s) à polymériser et de préférence environ 1 à 10 %.

L'agent réticulant ou de greffage est choisi parmi les diacrylates, les diallyliques et les allylacrylates. Il peut être introduit à n'importe quel moment avant la fin de la polymérisation et de préférence avant la fin de l'introduction du ou des monomère(s) du groupe A.

La quantité d'eau nécessaire à la polymérisation selon l'invention doit être telle que la concentration initiale en polymères d'ensemencement plus le chlorure de vinyle plus le(s) monomère(s) à polymériser, soit comprise entre 20 et 80 % et de préférence entre 45 et 75 % en poids par rapport au mélange réactionnel.

Afin d'améliorer la stabilité de la microsuspension, il peut être avantageux d'ajouter, avant et/ou en cours de polymérisation au moins un émulsifiant anionique éventuellement associé à au moins un émulsifiant non ionique. Les émulsifiants anioniques sont de préférence représentés par les savons d'acides gras, les alkylsulfates, les alkylsulfates ethoxylés, les alkylsulfonates, les alkylarylsulfonates, les vinylsulfonates, les allylsulfonates, les alkylsulfosuccinates, les alkylphosphates alcalins et les émulsifiants non ioniques par les polycondensats d'oxyde d'éthylène ou de propylène sur divers composés organiques hydroxylés. Cet émulsifiant peut être le même que celui ou ceux utilisés dans la préparation de polymères d'ensemencement.

Les quantités d'émulsifiant peuvent représenter jusqu'à 3 % en poids des monomères à polymériser. Ce sont les quantités généralement employées pour obtenir un effet utile dans la réaction.

Le milieu réactionnel est chauffé sous pression autogène à la température de polymérisation déterminée par les propriétés du copolymère, fonction des masses moléculaires, que l'on désire obtenir. Cette température est généralement comprise entre 10 et 85° C et de préférence entre 30 et 70° C.

Afin d'accélérer la vitesse de polymérisation, il est recommandé d'activer l'initiateur inclus dans les particules du premier ou des deux polymères d'ensemencement par un complexe métallique organosoluble formé tout au long de la polymérisation par réaction entre un sel métallique hydrosoluble et un agent complexant introduit progressivement, ainsi qu'il est décrit dans la demande de brevet français no 73.20 882 déposée le 8 juin 1973. Le sel métallique est mis en oeuvre en quantité telle que le rapport molaire sel métallique/initiateur est compris entre 0,001 et 0,1 et de préférence 0,001 et 0,03 et le métal est représenté par le fer, le cuivre, le cobalt, le nickel, le zinc, l'étain, le titane, le vanadium, le manganèse, le chrome, l'argent. L'agent complexant, représenté par les acides mono-ou poly-carboxyliques, alkylphosphoriques, les lactones, les cétones, les carbazones, est utilisé en quantité telle que le rapport molaire agent complexant/ sel métallique est compris entre 1 et 110 et de préférence entre 5 et 20.

On utilise de préférence le sulfate de cuivre comme sel métallique. Avantageusement, l'agent complexant est l'acide ascorbique.

Bien qu'il ne soit pas nécessaire, on peut rajouter un initiateur hydrosoluble dans le milieu réactionnel. Cet initiateur peut être choisi parmi ceux décrits précédemment pour la préparation du deuxième polymère d'ensemencement. De préférence, on utilise les persulfates des métaux alcalins.

La durée de polymérisation est en général comprise entre 30 minutes et 10 heures, de préférence comprise entre 1 et 7 heures.

Le latex ainsi préparé contient deux populations de particules présentant des diamètres moyens différents, l'un compris entre 0,4 et 2,5 µm et l'autre entre 0,08 et 1 µm et dans un rapport pondéral compris entre 0,1 et 10.

Il peut être utilisé dans la préparation de peintures ou de plastisols sans plastifiant.

Les copolymères du chlorure de vinyle préparés par le procédé de l'invention sont séparés du milieu aqueux par tous les moyens connus, tels que filtration, coagulation-essorage, écaillage, décantation centrifuge, atomisation et de préférence par atomisation.

Ces copolymères sont aptes à la préparation de plastisols fluides ayant des propriétés particulières telles que la diminution de la température de gélification, la diminution de la quantité de plastifiant, l'obtention de mousses à basse température et de bonne qualité cellulaire. Ils peuvent également être utilisés comme additifs anti-chocs ou comme "processing aid" ou à la fabrication des objets moulés par calandrage, extrusion, extrusion soufflage, injection et moulage.

L'invention sera mieux comprise à l'aide des exemples suivants :

### PARTIE EXPERIMENTALE

### Préparation du polymère d'ensemencement P1

Dans un réacteur de 800 litres, agité à 35 tours/min et régulé à 15° C, on introduit successivement :
- 375 kg d'eau
- 5 l de la solution tampon contenant 426 g du dihydrogénophosphate de potassium et 117 g de soude à 50 %
- 11 g de paraquinone en poudre
- 6 kg de peroxyde de lauroyle
- 320 kg de chlorure de vinyle
- 48 kg d'une solution aqueuse à 10 % en poids de dodécylbenzène sulfonate de sodium,
le réacteur étant mis sous vide juste avant l'introduction du chlorure de vinyle.
On réalise ensuite une fine dispersion du chlorure de vinyle dans le milieu aqueux à une température inférieure ou égale à 35° C, en agitant le dit milieu, pendant 105 minutes, à 5 500 tours/min.
Puis, on porte le milieu réactionnel à la température de polymérisation visée de 45° C sous pression autogène, la vitesse d'agitation étant de 30 tours/min. Au cours de la polymérisation, on introduit en continu la paraquinone avec un débit constant de 10,6 g/h.
Après la chute de pression jusqu'à la valeur de 3,5 bars, c'est-à-dire après 8 heures, on dégaze le chlorure de vinyle qui n'a pas réagi. On obtient ainsi un latex dont les particules ont un diamètre moyen d'environ 0,55 µm et renferment environ 2 % en poids par rapport au polymère, de peroxyde de lauroxyle.

### Préparation du polymère d'ensemencement P2

### Dans un réacteur de 800 litres muni d'un agitateur on introduit

415 Kg d'eau
1,25 Kg d'acide laurique et
0,8 Kg de soude pure.

On porte ensuite le mélange à la température de 65°C et on le maintient pendant une heure à cette température. Le mélange est alors refroidi jusqu'à 55°C, puis le réacteur est mis sous vide. Tout en maintenant la température du milieu à 55°C, on introduit ensuite 400 Kg de chlorure de vinyle, 4 litres d'une solution aqueuse contenant 109 g de persulfate d'ammonium et puis on ajoute en continu avec un débit constant de 3 l/h, une solution aqueuse contenant dans 30 litres d'eau, 0,72 g de sulfate de cuivre, 18 g de metabisulfite de potassium et 0,54 litre de l'ammoniaque 12 N. Trois heures après l'introduction du persulfate, on ajoute pendant 5 heures en continu à 8 I/h dans le milieu réactionnel, une solution aqueuse contenant 4,56 Kg de dodécylbenzène sulfonate de sodium pour 40 litres d'eau. Lorsque la pression interne est de 4,5 bars, on arrête la réaction par refroidissement rapide et on introduit ensuite une solution aqueuse de dodécylbenzène sulfonate de sodium contenant 7,28 Kg d'extrait sec. Les particules de polymères obtenus ont un diamètre moyen voisin de 0,12 µm.

### Exemple 1

Dans un réacteur de 28 litres muni d'un agitateur et préalablement mis sous vide, on introduit successivement par aspiration :
- 9825 g d'eau déminéralisée
- 1,5 g dihydrogénophosphate de potassium
- 56 mg de sulfate de cuivre
- 278 g considéré à l'état sec du latex de polymère d'ensemencement 1
- 270 g considéré à l'état sec du latex de polymère d'ensemencement 2

La température du milieu aqueux est alors de 25° C et la vitesse d'agitation est de 80 tours/min. Le réacteur est ensuite remis sous vide puis on introduit 7500 g du chlorure de vinyle et on porte le milieu réactionnel à la température visée de 58° C en environ 30 minutes.

Dès que la température du milieu réactionnel atteint 53° C, on introduit en continu pendant 30 minutes, 150 ml d'une solution aqueuse d'acide ascorbique à 1 g/litre. Cette solution est ensuite introduite en quantité variable décroissante et par intermittence pour éviter de fortes exothermies au cours de la polymérisation.

Une heure après le début de l'introduction de l'acide ascorbique, on introduit en continu à débit constant pendant 3 heures, 322 g d'acrylate de méthyle et 45 g de dodécylbenzène sulfonate de sodium, préalablement mis en solution dans 750 cm³ d'eau. Puis, on introduit en continu pendant une heure 250 cm³ d'une solution aqueuse de dodécylbenzène sulfonate de sodium à 60 g/litre.

Lorsque la pression du milieu réactionnel a baissé de 4 bars, soit 4 h 30 minutes après le début de l'introduction de l'acrylate de méthyle, on arrête l'introduction de la solution aqueuse de l'acide ascorbique et on réduit la vitesse d'agitation. Le réacteur est ensuite mis à la pression atmosphérique et le chlorure de vinyle non réagi est éliminé par dégazage. On obtient un latex dont la concentration en polymère est de 43 %. Le taux de transformation du chlorure de vinyle est de 89 %.

L'analyse granulométrique du latex montre que le copolymère est formé de deux polulations dont les particules ont respectivement des diamètres moyens de 0,19 µm et 1,25 µm. Les particules fines représentent 19 % en poids du copolymère.

### Exemple 2 comparatif

On opère comme décrit à l'exemple 1 sauf que l'on introduit 7500 g du chlorure de vinyle et que l'on opère en absence de l'acrylate de méthyle.

On obtient un latex dont la concentration en polymère est de 34 % en poids et le taux de transformation du chlorure de vinyle est de 75 %. L'analyse granulométrique du latex montre que le polymère est formé de deux populations dont les particules ont respectivement des diamètres moyens de 0,2 µm et 1,16µm. Les particules fines représentent 25 % en poids du polymère.

### Préparation des plastisols

Le latex à partir des exemples 1 et 2 est ensuite atomisé, puis la poudre obtenue est broyée. On prépare un plastisol en mélangeant 100 parties en poids de la poudre broyée avec 100 parties en poids de phtalate de dioctyle.

La température de gélification pour chaque plastisol est reportée dans le Tableau 1 et leurs propriétes rhéologiques sont mesurées à l'aide d'un rhéomètre rotationnel type Brookfield RTV à 25 °C et au bout de 30 minutes.

**Tableau 1**

| **Exemple** | **Température de gélification (°C)** | **Viscosité Brookfield (poises)** |
|---|---|---|
| 1 | 71 | 80 |
| 2 | 95 | 90 |

## Revendications

1. Procédé de préparation de latex de copolymères du chlorure de vinyle par polymérisation en microsuspension caractérisé en ce que l'on polymérise, avec ou sans ajout d'un initiateur hydrosoluble, le chlorure de vinyle avec au moins un monomère choisi dans le groupe A formé de méthacrylates et acrylates d'alkyle, le groupe alkyle ayant un nombre de carbone compris entre 1 et 8, et d'esters vinyliques des acides mono- et poly-carboxyliques et éventuellement avec un agent de réticulation ou de greffage, le ou les monomère(s) du groupe A étant introduit(s) en continu, en présence d'un polymère d'ensemencement (P1) à base de chlorure de vinyle préalablement préparé par polymérisation en microsuspension et dont les particules dispersées dans un milieu aqueux renferment au moins un initiateur organosoluble et en présence d'un deuxième polymère d'ensemencement (P2) à base de chlorure de vinyle dont la taille des particules est différente de celle du premier polymère d'ensemencement (P1 ).

2. Procédé selon la revendication 1 caractérisé en ce que le ou les monomère(s) du groupe A est ou sont introduits en continu avec un débit constant, débit croissant ou débit décroissant.

3. Procédé selon la revendication 1 ou 2 caractérisé en ce que l'on arrête l'introduction du ou des monomères une ou deux heures avant la fin de la polymérisation.

4. Procédé selon l'une quelconque des revendications 1 à 3 caractérisé en ce que le(s) monomère(s) du groupe A est ou sont l'acrylate de butyle et/ou l'acrylate de méthyle.

5. Procédé selon l'une quelconque des revendications 1 à 4 caractérisé en ce que le diamètre moyen des particules de polymère d'ensemencement P1 est compris entre 0,2 et 1,0 µm.

6. Procédé selon l'une quelconque des revendications 1 à 5 caractérisé en ce que le diamètre moyen des particules de polymère d'ensemencement (P2) est compris entre 0,05 et 0,8 µm.

7. Procédé selon la revendication 6 caractérisé en ce que le diamètre moyen des particules du polymère d'ensemencement (P2) est inférieur à celui des particules du polymère d'ensemencement (P1).

8. Procédé selon l'une quelconque des revendications 1 à 7 caractérisé en ce que le rapport massique du premier polymère d'ensemencement (P1) au deuxième polymère d'ensemencement est compris entre 95/5 et 5/95.

9. Procédé selon l'une quelconque des revendications 1 à 8 caractérisé en ce que la quantité totale de polymères d'ensemencement à mettre en oeuvre représente 1 à 50 % en poids par rapport à la somme polymères d'ensemencement, chlorure de vinyle et monomère(s) à polymériser.

10. Procédé selon l'une quelconque des revendications 1 à 9 caractérisé en ce que le deuxième polymère d'ensemencement mis en oeuvre est préparé par polymérisation en émulsion.

11. Procédé selon l'une quelconque des revendications 1 à 10 caractérisé en ce qu'un émulsifiant est ajouté avant et/ou en cours de polymérisation.

12. Procédé selon l'une quelconque des revendications 1 à 11 caractérisé en ce que la vitesse de polymérisation est accélérée par activation de l'initiateur inclus dans les particules du ou des polymère(s) d'ensemencement.

13. Latex bipopulé de copolymères du chlorure de vinyle, dont les particules sont constituées d'un coeur de polymères à base de chlorure de vinyle, d'une première couche de copolymère du chlorure de vinyle et d'au moins un monomère choisi dans le groupe A formé de méthacrylates et acrylates d'alkyle, le groupe alkyle ayant un nombre de carbone compris entre 1 et 8, et d'esters vinyliques des acides mono- et poly-carboxyliques et éventuellement d'une deuxième couche de polymères à base de chlorure de vinyle.

14. Latex selon 13 caractérisé en ce que le copolymère de la première couche est réticulé ou greffé.

15. Copolymères obtenus par atomisation du latex selon l'une des revendications 1 à 12 et 14.

16. Plastisols à base de copolymères selon la revendication 15.
